# EUROPEAN PATENT SPECIFICATION

(11) **EP 0 470 768 B1**
(45) Date of publication and mention of the grant of the patent: **12.06.1996**
(21) Application number: 91307077.7
(22) Date of filing: 01.08.1991
(51) Int. Cl.: G06T 1/60, G09G 1/16

(54) **Scheduling drawing operations of moving images**
Planung von Zeichenoperationen von beweglichen Bildern
Planification des opérations de dessin d'images animées

(30) Priority: 09.08.1990 GB 9017491
(43) Date of publication of application: 12.02.1992
(73) Proprietor: RESEARCH MACHINES PLC, Milton, Abingdon Oxon OX14 4 SE (GB)
(72) Inventor: Matthews, Anthony John, Grange Park, Swindon, Wilts. SN5 6EE (GB)
(74) Representative: Unwin, Stephen Geoffrey

(56) References cited:
- EP-A- 0 254 293
- EP-A- 0 283 565

## Description

This invention relates to the scheduling of drawing operations of moving images on a raster scan display screen in order to reduce the perceived flicker of the images.

There is often a requirement to produce the impression of movement of an image on a raster scan display screen such as that used with a personal computer, e.g. to display a bouncing ball or movement of characters and objects in games and educational programs. This is usually done by drawing the image in a number of successive positions and when this is combined with screen and eye persistence effects, this can give the impression of smooth movement of the image. This effect is also used to generate moving TV images.

However, as the screen is being refreshed regularly (usually between 50Hz and 70Hz), i.e. every 14 to 20 milliseconds, the time at which the images are re-drawn can be critical to their appearance on the display. The re-drawing process usually requires an image to be erased from a computer memory and another drawn in its place. Various techniques can be used to speed up this process, including partially erasing and re-drawing of solid objects that move only within their own bounds.

The re-drawing of the image in the computer memory takes a finite amount of time, e.g. from a few microseconds to hundreds of milliseconds, depending upon the complexity of the image, and within this time the asynchronous process of refreshing the screen can result in the display of partially erased or partially re-drawn maces on the screen. The effect of this is that the object appears to flicker or is partially obscurred. In some case, when the refresh period is synchronised with the erasure of an image for re-drawing, the image may disappear entirely from the screen. This can happen, for instance, when the image of a cursor is moved across the screen at a certain speed.

One technique for improving this situation is to double buffer the video image such that one copy of the desired image is displayed while another is updated. When the new image is fully drawn, the display is switched to this buffer and further re-drawing is performed in the other buffer etc.. However, this has a number of disadvantages:- twice as much memory is required to store a given image; additional hardware is required to provide means for switching access between the buffers; and performance overheads are added in maintaining both buffers with up to date images as all static images have to be drawn twice.

EP-A-0254293 describes a cathode ray tube controller in which CPU accesses to the video memory are optimised by means of a command queue.

This invention aims to provide improved means for reducing or minimising the perceived flicker of moving images on a raster scan display screen.

According to a first aspect of the invention, there is provided a computer system having a processing unit for controlling the drawing of images on a raster scan display screen from a computer memory and comprising monitoring means for monitoring the display of lines on the screen characterised in that informaticn as to which line is currently being drawn on the screen is made available to the processing unit and the processing unit is arranged to use this information so that, when the image of a moving object is to be displayed, drawing operations can be scheduled to maximise the time available for the image to be re-drawn in computer memory before it is displayed again, or to ensure there is sufficient time to re-draw the image before it is displayed again, and so reduce perceived flicker of the displayed image.

According to a second aspect of the invention, there is provided a method of operating a computer system with a processing unit arranged to control the drawing of images on a raster scan display screen from a computer memory is which the display of lines on the screen is monitored, characterised in that the display of lines is monitored to determine information as to which line is currently being drawn on the screen and the processing unit uses this information when the image of a moving object is to be displayed to schedule drawing operations so as to maximise the time available for the image to be re-drawn in computer memory before it is displayed again, or to ensure there is sufficient time to re-draw the image before it is displayed again, and thereby reduce perceived flicker of the displayed image.

Preferred features of the invention will be apparent from the following description and from the subsidiary claims of the specification.

The invention will now be further described, merely by way of example, with reference to the accompanying drawings, in which :-
Figures 1 (A) and (B) illustrate the problem associated with displaying moving images on a raster scan display screen;
Figure 2 is a block diagram of a preferred embodiment of apparatus according to the invention;
Figure 3 shows a more detailed, schematic diagram of a counter control logic block of the apparatus shown in Figure 2;
Figure 4 shows a more detailed, schematic diagram of a counter logic block of the apparatus shown in Figure 2; and
Figure 5 shows a more detailed, schematic diagram of a comparator logic block of the apparatus shown in Figure 2.

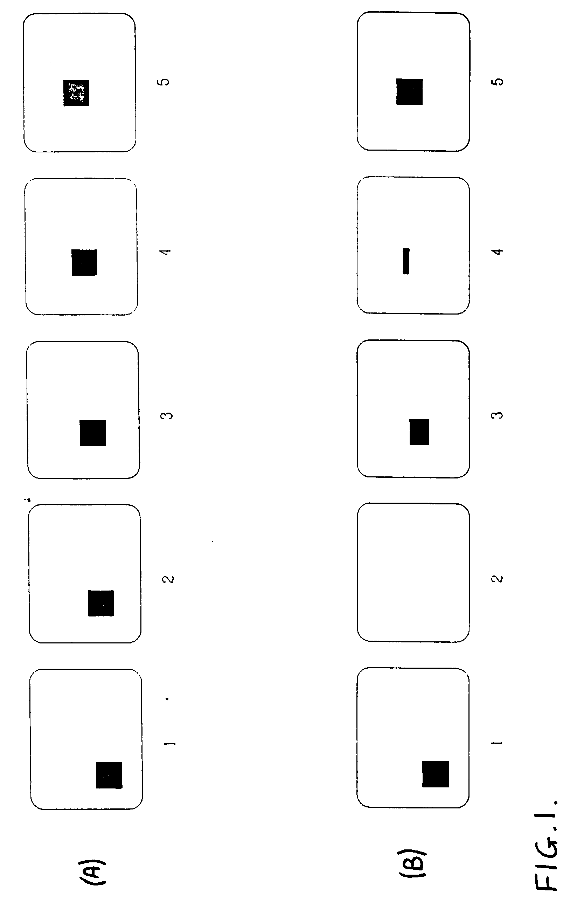

Figure 1 (A) shows the correct sequence of video frames for displaying the image of a small block moving from the lower, left hand corner of a screen towards the centre of the screen. This sequence of displays would produce a flicker-free display of the block moving across the screen.

Current personal computer systems only provide means to detect when the start of a video frame occurs. This provides poor vertical resolution and makes it difficult to draw moving images especially at the top of the screen.

Figure 1 (B) shows a sequence of video frames as may be produced by known display apparatus. In the second frame, the image of the block has been erased from the computer memory for re-drawing but has been displayed before re-drawing of the image has commenced. No image of the block is therefore displayed on the screen. In frame 3, the block has been displayed before it has been completely re-drawn so it is displayed as being slightly smaller than it should be. In frame 4, the block has been displayed just after it has started to be re-drawn so it is displayed as being much smaller than it should be. The result of these incorrectly drawn images is that the block appears to change shape and flicker as it moves across the screen.

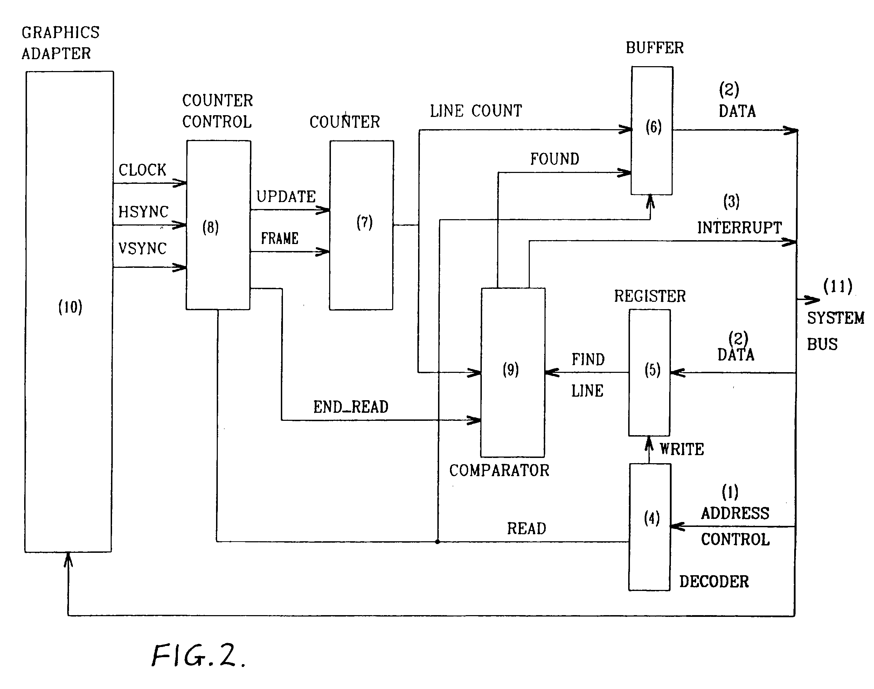

Figure 2 shows a block diagram of apparatus which monitors the current line being displayed so that the re-drawing process of a moving image can be synchronised with the times at which it is displayed. By commencing the re-drawing process as soon as the last position of the image has been displayed, the time availabie for re-drawing the image is maximised and so the display of incorrect images can be minimised. Of course, if a large or complex image is to be re-drawn, or the image is moving rapidly upwards on the screen, so the re-drawing process takes longer than the period between successive displays of the image (e.g. 14 to 20 milliseconds in a typical system), it may still be necessary to display the image in its previous position or to display a blank. However, by maximising the time available to re-draw images, the occurrence of this can be minimised.

Figure 2 shows a block diagram of apparatus for scheduling drawing operations comprising: counter control means 8, counter means 7, a buffer 6, a comparator 9, a register 5 and a decoder 4 connected between a graphics adaptor 10 and a system bus 11.

The system bus 11 carries address and control signals 1 for selecting between a number of attachments, data signals 2 for sending data to or receiving data from such attachments, and interrupt signals to allow attachments to request service from the system bus controller (not shown). Such means are commonly employed in computer systems, and are well understood by those skilled in the art.

The decoder 4 is connected to receive the system bus address and control signal 1 and acts to select the control signals intended for the device for generating data transfer operations such as reading a line count from the buffer 6 (indicated by the "READ" signal being active) and writing in the register 5 the line to be found (indicated by the "WRITE" signal being active).

The register 5 is loaded from the data bus 2 when the WRITE signal is active. The register 5 contains a 12 bit field indicating which video line the host Central Processing Unit (CPU) wishes to find (the "FIND LINE" signal) and a single bit field to determine if an interrupt signal should be generated (the "IRQ EN" signal) when this line is found. The bit field is thus:

| Bit | |
|---|---|
| 15 | IRQ EN |
| 11-0 | FIND LINE value |

The buffer 6 allows the host CPU to read the current value of the line counter 7 to check periodically which line is being drawn on the screen. The signal "LINE COUNT" signal received from the counter 7 is a 12 bit field and there is also a single bit "FOUND" field to enable the host CPU to check if the requested "FIND LINE" signal has occurred yet. The bit field of the buffer 6 is thus:

| Bit | |
|---|---|
| 15 | FOUND status |
| 14-12 | 0 |
| 11-0 | LINE COUNT value |

Also attached to the system bus 11 is the personal computer graphics adapter device 10. This device produces a raster scan video image under control of the host CPU and is more fully described in the PVGA1A User's Manual - published by Western Digital (Paradise Systems) Corporation, Brisbane, CA. Many of the signals associated with this device are not shown in the drawings as they do not contribute to the understanding of the apparatus described. There are however three signals of interest produced by this device:
(1) CLOCK is the pixel clock - there is a rising edge on this signal for each pixel displayed.
(2) HSYNC is the horizontal synchronisation signal - there is a rising edge on this signal during the horizontal (LINE) retrace period of the raster scanned display.
(3) VSYNC is the vertical synchronisation signal - there is a rising edge on this signal during the vertical (FRAME) retrace period of the raster scanned display.

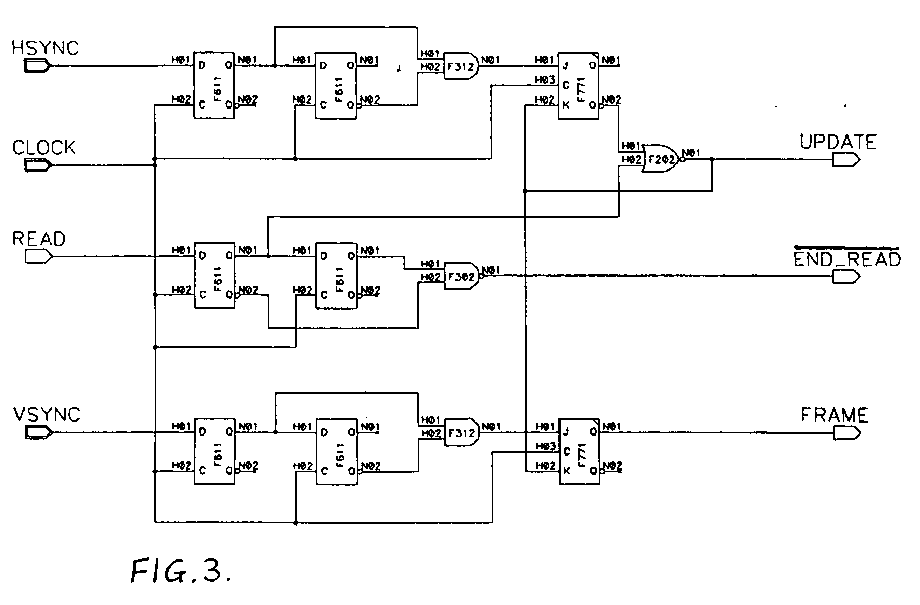

The counter control means (8) receives these signals from the graphics adapter 10 along with the READ signal (described above). The function of the counter control means 8 is to arbitrate between system bus 11 reads of the line count buffer 6 and updates of this buffer to avoid the host CPU receiving invalid data. The output signals from the counter control means 8 are UPDATE, FRAME and END_READ. The UPDATE signal is active shortly after a rising edge on the HSYNC signal to increment the line counter 7; the FRAME signal is active shortly after a rising edge on the VSYNC signal to clear the line counter 7. The END_READ signal is active shortly after a read of the line count buffer 6 to clear the FOUND and INTERRUPT signals. Further details of the counter control means 8 are given below with reference to Figure 3.

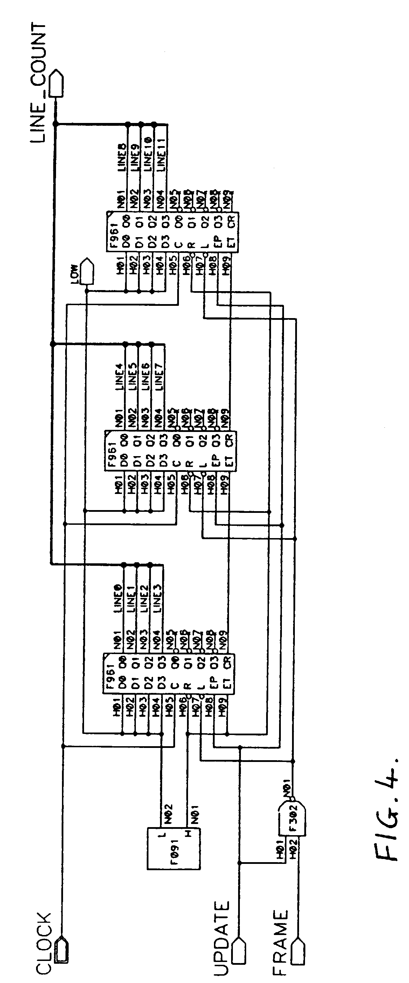

The counter means 7 maintains a count of the current video lines displayed. The counter is 12 bits wide, allowing up to 4096 line resolution to be monitored. The counter is incremented when the UPDATE signal is active and is cleared when the FRAME signal is active. The output is a 12 bit value LINE COUNT signal. Further details of the counter means 7 are given below with reference to Figure 4.

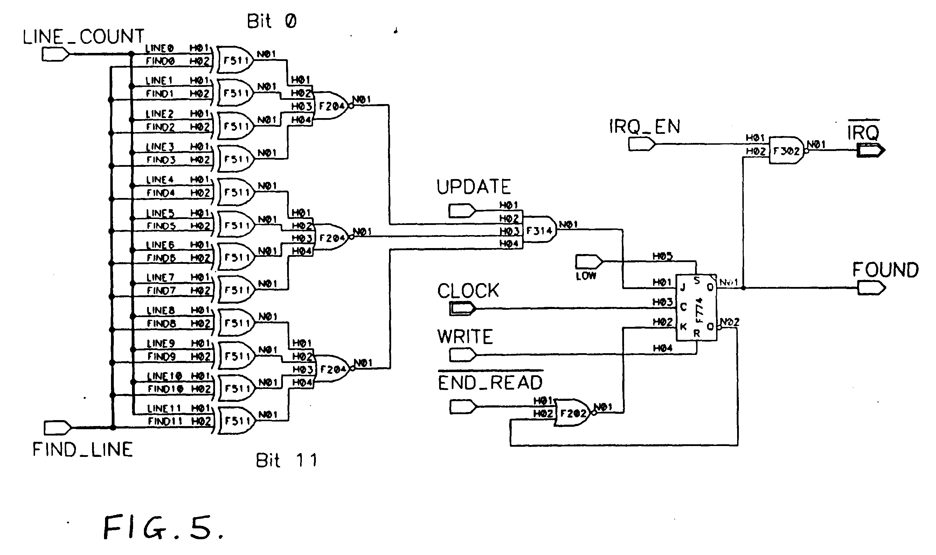

The line comparator and interrupt signal generation means 9 compares the LINE COUNT signal received from the counter 7 with the value held in the register 5. When these two become equal, the FOUND signal is activated. If enabled (via IRQ_EN), the interrupt request signal (IRQ - 3) is also activated to indicate to the host CPU that the graphics adapter 10 has reached a particular line. Once active, both the FOUND and IRQ signals are maintained until the host CPU reads the line count via the buffer 6 or writes a new FIND LINE value via the register 5. Further details of the comparator and interrupt signal generation means 9 are given below with reference to Figure 5.

The logic components shown in Figures 3, 4 and 5 are more fully described in SC-5 standard cell family 1.2 micron technology Product Description - published by NEC Electronics (UK) Ltd. PD-SC-5FAM089V10. Briefly, the logic components shown are:
- F091: High and Low level generator.
- F202: 2 input NOR gate.
- F302: 2 input NAND gate.
- F312: 2 input AND gate.
- F314: 4 input AND gate.
- F511: 2 input exclusive OR gate.
- F611: Positive edge triggered D type flip-flop.
- F771: Positive edge triggered J-K type flip-flop.
- F774: Positive edge triggered J-K flip-flop with active high set and reset.

Figure 3 provides a detailed schematic of an embodiment of the counter control means (8). Signals HSYNC, CLOCK and VSYNC are provided by the graphics adaptor hardware 10; these are the horizontal synchronisation signal (line retrace), pixel clock and vertical synchronisation signal (frame retrace), respectively. The signal READ is provided by the decoder 4 and is active when the line count buffer 6 is being read. The signal UPDATE is derived from the HSYNC signal; this is active for one clock period after a rising edge on the HSYNC signal, when the line count buffer 6 is not being read, and ensures the line count remains stable while it is being read. The signal END_READ is derived from the signal READ; this is active for one clock period after the line count buffer 6 has been read. The signal FRAME is derived from the signal VSYNC; this signal becomes active following a rising edge on the signal VSYNC and is maintained until the signal UPDATE next becomes active.

Figure 4 provides a detailed schematic of an embodiment of the counter logic block 7. The signals CLOCK, UPDATE and FRAME have been described above. The signal LINE_COUNT is a 12 bit binary encoded number that indicates which line is currently being displayed on the screen; the count changes synchronously with the signal UPDATE; if the signal FRAME is active, it is initialised to zero, otherwise it is incremented. The signal LINE_COUNT is routed to the line counter buffer 6 to enable it to be read directly.

Figure 5 provides a detailed schematic of an embodiment of the comparator logic block 9. The signals LINE_COUNT, UPDATE, CLOCK, and END_READ have been described above. The signal FIND_LINE is a 12 bit binary encoded number that indicates which line needs to be found in order for drawing operations to start - this is driven from the outputs of the find line register 5. The signal WRITE is derived from the decoder and is active when the find line register 5 is being written. The signal FOUND becomes active the line after the LINE COUNT and FIND LINE signals become equal; this signal can be read via the line count buffer 6 to determine when this condition has occurred directly. Once active, the signal FOUND remains active until after the line count buffer 6 is read (as indicated by END_READ), or until a new FIND_LINE value is written. The signal IRQ_EN is derived from a spare bit of the find line register 5; when it is active and the requested line has been found, the interrupt signal IRQ is asserted. If IRQ_EN is inactive, no interrupt signal is generated.

A reader skilled in the art will appreciate that:
* Although the graphics adapter 10 and line count arrangement have been described separately, it would be possible to integrate the required logic into the graphics adapter 10 to provide a more cost effective arrangement,
* This apparatus described provides an enhancement over current personal computer implementations, but compatibility with older systems could be maintained by using a FIND LINE value fixed at zero.
* The bit length of the line count and required line signals can be tailored to suit particular applications - between 9 and 12 bits may typically be appropriate, although more could be used.
* The host CPU may operate either by waiting for an interrupt signal, or by polling the buffer 6. In this case, the logic associated with generation of an interrupt signal may be omitted. If polled operation only is required, the register 5 and the comparator 9 can be omitted.
* In some systems, the CPU may program a required line for interrupting a number of lines before that actually required for smooth drawing; this allows time for the interrupt service routine to be entered and for the master to prepare for the drawing operation so that drawing can start immediately the display of the area containing the old (or the new) image has been completed.

A line counter is often incorporated within a grapinics adapter such as the PVGAIA but no facility is provided for reading it. As indicated above, the graphics adapter 10 could be modified to allow this line counter to be read and so dispense with the need to provide an additional counter. However, this approach raises a number of complications and in many cases it may be preferable to provide the additional line counter as described in the illustrated apparatus.

The apparatus may also be controlled to operate by selectively polling the buffer 6 or generating an interrupt signal when the required line has been reached depending on the requirements of the program and the most appropriate method of operation for optimising scheduling of the drawing process.

Instead of a line counter it would also be possible to provide a timer and to predict the line reached from a knowledge of the time elapsed since the last VSYNC signal, the screen refresh frequency and the number of lines in a display. This approach may not provide the same vertical resolution as a direct line count but in some circumstances may be satisfactory.

It will be appreciated that the apparatus described above provides a mechanism whereby a hardware counter keeps track of the vertical display position of the screen; this counter may be read directly by the host CPU to determine reliably the current vertical display position. Means are also provided whereby the processor may program an interrupt signal to occur when a particular line has been displayed so that the processor may perform other activities while waiting for the correct display position for drawing to be reached.

The apparatus thus provides means to accurately schedule a sequence of drawing operations such that flickering of moving images is reduced to a minimum. The host CPU is able to detect when all the lines that are to be re-drawn for a particular image have been displayed and can start re-drawing the image immediately thereafter. This maximises the time available to complete the image (and to draw other images) before those lines are displayed again, so the display of partial images is avoided or minimised.

The host CPU may schedule drawing operations when multiple images are to be displayed, e.g. by sorting the drawing operations required at any one time from the top of the screen to the bottom and arranging for them to be drawn at the correct time by checking the current display position before starting a drawing operation. Alternatively, the drawing operations may be scheduled by finding a particular line to start the drawing operation (e.g. by means of an interrupt signal), drawing and then either checking the current line being displayed to ensure that display of the next image has been completed (if it is due soon after) or programming a new findline request and waiting for an interrupt signal before continuing with the next drawing operation. In this way, the need for multiple FIND_LINE signals and comparators for scheduling multiple drawing operations can be avoided.

By providing increased vertical resolution of the current display position, e.g. by means of a line count as described above, the scheduling of drawing operations may be optimised, and the most appropriate sequence of operations selected in dependance upon the size of the image to be drawn, its position on the screen and its speed of movement across the screen.

The apparatus described above thus provides a more effective way of producing flicker-free images by synchronising the re-drawing operation with the screen refresh. In this way, the processor performing the drawing can ensure it has sufficient time to erase and re-draw a given image before it is displayed, thereby reducing or eliminating the flickering.

## Claims

1. A computer system having a processing unit for controlling the drawing of images on a raster scan display screen from a computer memory and comprising monitoring means (7, 8) for monitoring the display of lines on the screen characterised in that information as to which line is currently being drawn on the screen is made available to the processing unit and the processing unit is arranged to use this information so that, when the image of a moving object is to be displayed, drawing operations can be scheduled to maximise the time available for the image to be re-drawn in computer memory before it is displayed again, or to ensure there is sufficient time to re-draw the image before it is displayed again, and so reduce perceived flicker of the displayed image.

2. A computer system as claimed in claim 1 in which the monitoring means comprises line counting means (7, 8) to indicate the current line of the screen being displayed.

3. A computer system as claimed in claim 2 comprising a graphics adaptor (10) arranged to provide a raster scan display under the control of the processing unit and in which the line counting means (7, 8) is connected to receive line retrace and frame retrace signals from the graphics adaptor (10) from which it derives a current line count and in which access means (6) are provided to permit the processing unit to access the current line count for use in scheduling drawing operations.

4. A computer system as claimed in claim 3 comprising interrupt means (9) for generating an interrupt signal to indicate to the processing unit that a given line count has been reached so the processing unit may perform other activities while waiting for the given line count to be reached.

5. A computer system as claimed in any preceding claim arranged to operate under the control of programmable means which uses the information as to which line is currently being drawn on the screen made available by the monitoring means (7, 8) to schedule drawing operations to reduce flickering of images of moving objects.

6. A method of operating a computer system with a processing unit arranged to control the drawing of images on a raster scan display screen from a computer memory in which the display of lines on the screen is monitored, characterised in that the display of lines is monitored to determine information as to which line is currently being drawn on the screen and the processing unit uses this information when the image of a moving object is to be displayed to schedule drawing operations so as to maximise the time available for the image to be re-drawn in computer memory before it is displayed again. or to ensure there is sufficient time to re-draw the image before it is displayed again, and thereby reduce perceived flicker of the displayed image.

## Patentansprüche

1. Ein Computersystem mit einer Verarbeitungseinheit zum Steuern des Zeichnens auf einem Rasterscan-Bildschirm von Bildern aus einem Computerspeicher und ein Überwachungsmittel (7, 8) zum Überwachen der Darstellung von Zeilen auf dem Bildschirm umfassend, dadurch gekennzeichnet, daß Information darüber, welche Zeile soeben auf dem Bildschirm gezeichnet wird, der Verarbeitungseinheit verfügbar gemacht wird und daß die Verarbeitungseinheit zur Verwertung dieser Information eingerichtet ist, so daß, wenn das Bild eines bewegten Objekts darzustellen ist, der Ablauf von Zeichenoperationen geplant werden kann, um die zum Umzeichnen des Bildes in dem Computerspeicher, bevor das besagte Bild wieder dargestellt wird, verfügbare Zeit zu maximieren bzw. um sicherzustellen, daß zum Umzeichnen des Bildes, bevor dieses wieder dargestellt wird, genügend Zeit verfügbar ist, und auf diese Weise wahrgenommenes Flimmern des dargestellten Bildes einzuschränken.

2. Ein Computersystem nach Anspruch 1, bei dem das Überwachungsmittel ein Zeilenzählmittel (7,8) zum Anzeigen der Bildschirmzeile, die soeben dargestellt wird, umfaßt.

3. Ein Computersystem nach Anspruch 2, umfassend einen Grafikadapter (10), der so eingerichtet ist, daß er unter Steuerung durch die Verarbeitungseinheit eine Rasterscan-Darstellung liefert und in dem das Zeilenzählmittel (7, 8) so geschaltet ist, daß es Zeilenrücklauf- und Bildrücklaufsignale von dem Grafikadapter (10) erhält, von denen es eine laufende Zeilenzahl ableitet, und in dem Zugriffsmittel (6) vorgesehen sind, um es zu ermöglichen, daß die Verarbeitungseinheit zwecks Verwertung bei der Ablaufplanung von Zeichenoperationen zu der jeweiligen Zeilenzahl Zugriff hat.

4. Ein Computersystem nach Anspruch 3, umfassend ein Unterbrechungsmittel (9) zwecks Erzeugung eines Unterbrechungssignals, um der Verarbeitungseinheit anzuzeigen, daß eine vorgegebene Zeilenzahl erreicht wurde, so daß die Verarbeitungseinheit andere Funktionen ausführen kann, während sie darauf wartet, bis die vorgegebene Zeilenzahl erreicht wurde.

5. Ein Computersystem nach einem der vorstehenden Ansprüche, das so eingerichtet ist, daß es unter Steuerung durch das programmierbare Mittel arbeitet, das die durch das Überwachungsmittel (7, 8) verfügbar gemachte Information darüber, welche Zeile soeben auf dem bildschirm gezeichnet wird, für die Ablaufplanung von Zeichenoperationen verwertet, um das Flimmern von Bildern bewegter Objekte einzuschränken.

6. Ein Verfahren zum Betrieb eines Computersystems mit einer Verarbeitungseinheit, die sc eingerichtet ist, daß sie das Zeichnen auf einem Rasterscan-Bildschirm von Bildern aus einem Computerspeicher, in dem die Darstellung von Bildschirmzeilen überwacht wird, steuert, dadurch gekennzeichnet, daß die Zeilendarstellung überwacht wird, um eine Information darüber zu gewinnen, welche Zeile soeben auf dem Bildschirm gezeichnet wird, und die Verarbeitungseinheit, wenn das Bild des besagten Objekts darzustellen ist, diese Information dazu verwertet, den Ablauf von Zeichenoperationen zu planen, um die zum Umzeichnen des Bildes in dem Computerspeicher, bevor dieses wieder dargestellt wird, verfügbare Zeit zu maximieren bzw. um sicherzustellen, daß zum Umzeichnen des Bildes, bevor dieses wieder dargestellt wird, genügend Zeit verfügbar ist und auf diese Weise wahrgenommenes Flimmern des dargestellten Bildes einschränken.

## Revendications

1. Système informatique ayant un processeur pour commander le traçage des images d'un écran d'affichage à balayage tramé à partir d'une mémoire d'ordinateur et comprenant un moyen de contrôle (7, 8) pour contrôler l'affichage des lignes sur l'écran, caractérisé en ce que les informations sur la ligne qui est actuellement tracée sur l'écran sont fournies au processeur et le processeur est agencé pour utiliser ces informations de telle sorte que, lorsque l'image d'un objet mcbile doit être affichée, les opérations de traçage peuvent être programmées pour maximiser le temps disponible pour le retraçage de l'image dans la mémoire de l'ordinateur avant qu'elle ne soit de nouveau affichée, cu pour faire en sorte qu'il y ait suffisamment de temps pour retracer l'image avant qu'elle ne soit affichée de nouveau, et réduire ainsi le scintillement perçu de l'image affichée.

2. Système informatique selon la revendication 1, dans lequel le moyen de contrôle comprend un moyen de comptage des lignes (7, 8) pour indiquer la ligne de l'écran actuellement affichée.

3. Système informatique selon la revendication 2, comprenant un adaptateur graphique (10) agencé pour fournir un affichage à balayage tramé sous la commande du processeur et dans lequel le moyen de comptage des lignes (7, 8) est connecté pour recevoir de l'adaptateur graphique (10) des signaux de retraçage des lignes et de retraçage des images d'où il dérive un nombre de lignes actuel et dans lequel des moyens d'accès (6) sont prévus pour permettre au processeur d'accéder au nombre de lignes actuel pour l'utiliser dans la programmation des opérations de traçage.

4. Système informatique selon la revendication 3, comprenant un moyen d'interruption (9) pour générer un signal d'interruption afin d'indiquer au processeur qu'un nombre de lignes donné a été atteint de telle sorte que le processeur puisse exécuter d'autres activités en attendant que le nombre de lignes donné ait été atteint.

5. Système informatique selon l'une quelconque des revendications précédentes, agencé pour fonctionner sous la commande d'un moyen programmable qui utilise les informations relatives à la ligne actuellement tracée sur l'écran fournies par le moyen de contrôle (7, 8) pour programmer les opérations de traçage afin de réduire le scintillement des images d'objets mobiles.

6. Méthode d'exploitation d'un système informatique avec un processeur agencé pour commander le traçage des images sur un écran d'affichage à balayage tramé à partir d'une mémoire d'ordinateur, dans lequel l'affichage des lignes sur l'écran est contrôlé, caractérisée en ce que l'affichage des lignes est contrôlé pour déterminer les informations relatives à la ligne actuellement tracée sur l'écran, et en ce que le processeur utilise ces informations lorsque l'image d'un objet mobile doit être affichée pour programmer les opérations de traçage afin de maximiser le temps disponible pour le retraçage de l'image dans la mémoire de l'ordinateur avant qu'elle soit de nouveau affichée, ou pour faire en sorte qu'il y ait suffisamment de temps pour retracer l'image avant qu'elle soit de nouveau affichée, et réduire ainsi le scintillement perçu de l'image affichée.
